# EUROPEAN PATENT APPLICATION

(11) **EP 3 876 164 A1**
(43) Date of publication of application: **08.09.2021**
(21) Application number: 20191458.7
(22) Date of filing: 18.08.2020
(51) Int. Cl.: G06N 3/063, G06N 3/04, G06F 8/41

(54) **METHOD AND DEVICE FOR DETERMINING OPTIMAL OPERATION PATH, AND STORAGE MEDIUM**

(30) Priority: 02.03.2020 CN 202010135015
(71) Applicant: Beijing Xiaomi Pinecone Electronics Co., Ltd., Beijing 100085 (CN)
(72) Inventor: LU, Xuhui, Beijing, 100085 (CN); HE, Liangliang, Beijing, 100085 (CN); YE, Jianwu, Beijing, 100085 (CN)
(74) Representative: Steinbauer, Florian

(57) **Abstract**

The present invention provides a method and device for determining an optimal operation path, and a storage medium. The method includes: determining (S11) a model operation topology graph including a plurality of operation nodes according to a neural network model; selecting (S12) a plurality of operators with a same operation type as the operation node for each operation node in the model operation topology graph, and creating a corresponding operator node for each operator; according to a connection relationship between the operation nodes in the model operation topology graph, constructing (S13) an operator topology graph based on the created operator nodes; determining (S14) an operation index of each of the operator nodes, and weighting the operator topology graph based on the operation index of each operator node to obtain a weighted operator topology graph; and selecting (S15) an optimal operation path in the weighted operator topology graph.

## Description

### TECHNIC AL FIELD

The present invention relates to the technical field of deep learning, and more particularly, to a method and device for determining an optimal operation path, and a storage medium.

### BACKGROUND

With the development of data processing technology and the significant improvement of data computing power, a deep learning technology has been making breakthroughs which greatly promotes the progress of the artificial intelligence industry and makes breakthroughs in many fields. The fields in which the artificial intelligence is commonly applied include medical, voice processing, translation, automatic driving, advertising recommendation, industry forecasting, and the like.

A deep learning framework technology is the foundation of the deep learning technology. In recent years, various deep learning frameworks have emerged. On the other hand, the continuous enrichment of artificial intelligence scenarios makes terminal intelligent devices become access points of artificial intelligence. The computing and storage capabilities of mobile terminals can already meet needs of many artificial intelligence applications. Compared with the development of the deep learning technology in the cloud in previous years, the deployment of deep learning on device sides is increasingly in demand, and with the continuous development of machine learning technology and hardware and software equipment, the demand will be more and more abundant in the future. In order to accelerate the implementation of deep learning on the device sides, various companies also launch a variety of deep learning inference frameworks on the device sides.

A greedy algorithm is used in most deep learning frameworks to construct a neural network link. Based on conditions, such as a data type of a current operator, a data format of the current operator, and whether a computing element supports the operator, the most suitable computing unit is selected for execution. In many scenarios, the neural network link constructed by using the greedy algorithm is not the one with the optimal performance.

### SUMMARY

To overcome the problems in the related art, the present invention provides a method and device for determining an optimal operation path, and a medium according to the independent claims.

According a first aspect of embodiments of the present invention, a method for determining an optimal operation path is provided, which includes that a model operation topology graph is determined according to a neural network model, the model operation topology graph includes a plurality of operation nodes; a plurality of operators with a same operation type as the operation node are selected for each operation node in the model operation topology graph, and a corresponding operator node is created for each of the plurality of operators; according to a connection relationship between the operation nodes in the model operation topology graph, an operator topology graph is constructed based on the created operator nodes; an operation index of each of the operator nodes is determined, and the operator topology graph is weighted based on the operation index of each of the operator nodes to obtain a weighted operator topology graph; and an optimal operation path is selected in the weighted operator topology graph.

In another embodiment, the operation that the operation index of each of the operator nodes is determined may further include that a reference operation capability of the operator node is determined; and the operation index of the operator node is calculated according to the reference operation capability of the operator node, an input data block, and an index calculation function of the operation node corresponding to the operator node.

In another embodiment, the method may further include that a reference operation capability of the operator is determined.

The operation that the reference operation capability of the operator node is determined may include that the reference operation capability of the corresponding operator of the operator node is taken as the reference operation capability of the operator node.

The operation that the reference operation capability of the operator is determined may include one of testing an operation capability of the operator by using test data of a set data volume, and taking a testing result as the reference operation capability of the operator; or testing the operation capability of the operator by using test data of different data volumes, and taking an average value of testing results as the reference operation capability of the operator.

In another embodiment, the operation that the operator topology graph is weighted based on the operation index of each operator node may further include determining an operation index of one of a forward edge including the operator node and a forward adjacent operator node according to the operation index of each operator node; or a backward edge including the operator node and a backward adjacent operator node according to the operation index of each operator node.

In another embodiment, the operation that the optimal operation path is selected in the weighted operator topology graph may further include that in response to that the model operation topology graph has more than one operation path, the model operation topology graph is divided into a plurality of sub-topology graphs; the plurality of sub-topology graphs include a main path sub-topology graph and at least one branch path sub-topology graph, and both head and tail operation nodes of the branch path sub-topology graph belong to the main path sub-topology graph; and the optimal operation path is selected in the weighted operator topology graph according to the main path sub-topology graph and the branch path sub-topology graph.

In another embodiment, the operation that the optimal operation path is selected in the weighted operator topology graph according to the main path sub-topology graph and the branch path sub-topology graph may include one of determining a main path weighted operator topology graph corresponding to the main path sub-topology graph, determining an optimal operator node of all the operation nodes in the main path weighted operator topology graph, and determining a main path optimal operation path according to the determined optimal operator node; for each branch path sub-topology graph, determining the optimal operator node corresponding to the operation nodes except the head operation node and the tail operation node, and determining a branch path optimal operation path according to the determined optimal operator node, the optimal operator node of the head operation node and the optimal operator node of the tail operation node; and composing the main path optimal operation path and the branch path optimal operation path into the optimal operation path; or determining the main path weighted operator topology graph corresponding to the main path sub-topology graph, and determining the optimal operator node corresponding to each operation node in the main path weighted operator topology graph; for each branch path sub-topology graph, determining the optimal operator node corresponding to the operation nodes except the head operation node and the tail operation node; and forming the optimal operation path according to the determined optimal operator node.

According a second aspect of embodiments of the present invention, a device for determining an optimal operation path is also provided, which includes a first determining module, configured to determine a model operation topology graph according to a neural network model, the model operation topology graph including a plurality of operation nodes; a creating module, configured to select a plurality of operators with a same operation type as the operation node for each operation node in the model operation topology graph, and create a corresponding operator node for each of the plurality of operators; a constructing module, configured to construct, according to a connection relationship between the operation nodes in the model operation topology graph, an operator topology graph based on the created operator nodes; a second determining module, configured to determine an operation index of each of the operator nodes; a weighting module, configured to weight the operator topology graph based on the operation index of each of the operator nodes to obtain a weighted operator topology graph; and a first selecting module, configured to select an optimal operation path in the weighted operator topology graph.

In another embodiment, the second determining module may further include a third determining module, configured to determine a reference operation capability of the operator node; and a calculating module, configured to calculate the operation index of the operator node according to the reference operation capability of the operator node, an input data block, and an index calculation function of the operation node corresponding to the operator node.

In another embodiment, the device may further include a fourth determining module, configured to determine a reference operation capability of the operator.

The third determining module may further be configured to take the reference operation capability of the corresponding operator of the operator node as the reference operation capability of the operator node.

The operation that the reference operation capability of the operator is determined may include one of testing an operation capability of the operator by using test data of a set data volume, and taking a testing result as the reference operation capability of the operator; or testing the operation capability of the operator by using test data of different data volumes, and taking an average value of testing results as the reference operation capability of the operator.

In another embodiment, the weighting module may be further configured, in response to weighting the operator topology graph based on the operation index of each operator node, by determining an operation index of one of a forward edge including the operator node and a forward adjacent operator node according to the operation index of each operator node; or a backward edge including the operator node and a backward adjacent operator node according to the operation index of each operator node.

In another embodiment, the first selecting module may further include a dividing module, configured to divide, in response to that the model operation topology graph has more than one operation path, the model operation topology graph into a plurality of sub-topology graphs; the plurality of sub-topology graphs include a main path sub-topology graph and at least one branch path sub-topology graph, and both head and tail operation nodes of the branch path sub-topology graph belong to the main path sub-topology graph; and a second selecting module, configured to determine the optimal operation path in the weighted operator topology graph according to the main path sub-topology graph and the branch path sub-topology graph.

In another embodiment, the second selecting module may further be configured to determine the optimal operation path in the weighted operator topology graph according to the main path sub-topology graph and the branch path sub-topology graph by using one of determining a main path weighted operator topology graph corresponding to the main path sub-topology graph, determining an optimal operator node of all the operation nodes in the main path weighted operator topology graph, and determining a main path optimal operation path according to the determined optimal operator node; for each branch path sub-topology graph, determining the optimal operator node corresponding to the operation nodes except the head operation node and the tail operation node, and determining a branch path optimal operation path according to the determined optimal operator node, the optimal operator node of the head operation node and the optimal operator node of the tail operation node; and composing the main path optimal operation path and the branch path optimal operation path into the optimal operation path; or determining the main path weighted operator topology graph corresponding to the main path sub-topology graph, and determining the optimal operator node corresponding to each operation node in the main path weighted operator topology graph; for each branch path sub-topology graph, determining the optimal operator node corresponding to the operation nodes except the head operation node and the tail operation node; and forming the optimal operation path according to the determined optimal operator node.

According a third aspect of embodiments of the present invention, a device for determining an optimal operation path is also provided, which may include a processor; and a memory configured to store instructions executable by the processor; the processor is configured to determine a model operation topology graph according to a neural network model, the model operation topology graph including a plurality of operation nodes; select a plurality of operators with a same operation type as the operation node for each operation node in the model operation topology graph, and create a corresponding operator node for each of the plurality of operators; according to a connection relationship between the operation nodes in the model operation topology graph, construct an operator topology graph based on the created operator nodes; determine an operation index of each of the operator nodes, and weight the operator topology graph based on the operation index of each of the operator nodes to obtain a weighted operator topology graph; and select an optimal operation path in the weighted operator topology graph.

According a fourth aspect of the embodiments of the present invention, a computer-readable storage medium is also provided. When instructions in the storage medium are executed by a processor of a mobile terminal, the mobile terminal can execute the method for determining an optimal operation path. The method may include that a model operation topology graph is determined according to a neural network model, the model operation topology graph including a plurality of operation nodes; a plurality of operators with a same operation type as the operation node are selected for each operation node in the model operation topology graph, and a corresponding operator node is created for each of the plurality of operators; according to a connection relationship between the operation nodes in the model operation topology graph, an operator topology graph is constructed based on the created operator nodes; an operation index of each of the operator nodes is determined, and the operator topology graph is weighted based on the operation index of each of the operator nodes to obtain a weighted operator topology graph; and an optimal operation path is selected in the weighted operator topology graph.

The technical solutions in the embodiments of the present invention may have the following beneficial effects after a plurality of operators with the same operation type as the operation node are selected for each operation node in the model operation topology graph, the operator topology graph is constructed, and the weighted operator topology graph is obtained by weighting the operator topology graph according to the operation index of the operator node, thus more accurately expressing a link between the operator nodes corresponding to the adjacent different operation nodes and making the selected optimal operation path more reasonable, at the same time, reducing the operation cost and improving the efficiency of inference calculation.

It is to be understood that the above general descriptions and detailed descriptions below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a flow chart of a method for determining an optimal operation path according to an exemplary embodiment.
FIG. 2 is a structure diagram of a model operation topology graph according to an exemplary embodiment.
FIG. 3 is a structure diagram of an operator topology graph corresponding to the model operation topology graph in FIG. 2 according to an exemplary embodiment.
FIG. 4 is a flow chart of S15 in FIG. 1 according to an exemplary embodiment.
FIG. 5 is a structure diagram of a model operation topology graph according to an exemplary embodiment.
FIG. 6 is a structure diagram of an optimal operation path selected based on the model operation topology graph in FIG. 5 according to an exemplary embodiment.
FIG. 7 is a structure diagram of a device for determining an optimal operation path according to an exemplary embodiment.
FIG. 8 is a structure diagram of a device for determining an optimal operation path according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

A deep learning framework generally includes two frameworks, a deep learning training framework and a deep learning inference framework. The deep learning training framework is used for model training by using sample data, and the deep learning inference framework is used for data processing in practical application scenarios. The deep learning inference framework may be considered as a component that constructs an application programming interface (API) for calculating by using a deep learning model. An upper APP may perform inference operations by calling the API.

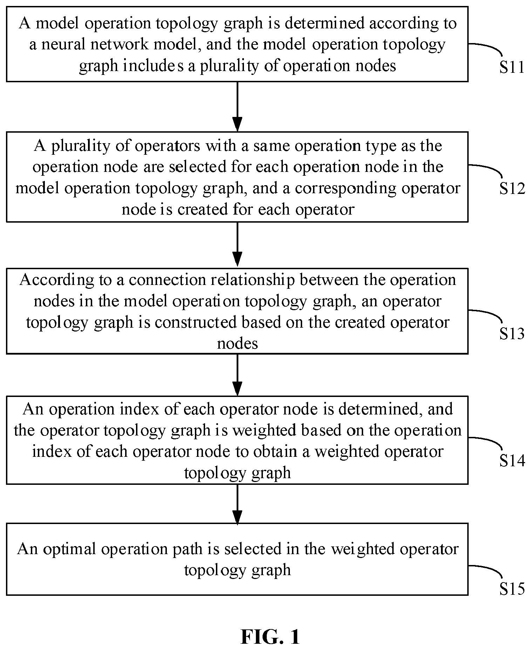

The embodiments of the present invention provide a method for determining an optimal operation path, which is applied to the deep learning inference framework and performed by the deep learning inference framework. FIG. 1 is a flow chart of a method for determining an optimal operation path according to an exemplary embodiment. As illustrated in FIG. 1, the method may include operations as follows.

At S11, a model operation topology graph is determined according to a neural network model, and the model operation topology graph includes a plurality of operation nodes.

At S12, for each operation node in the model operation topology graph, a plurality of operators with a same operation type as the operation node are selected, and a corresponding operator node is created for each operator.

At S13, according to a connection relationship between the operation nodes in the model operation topology graph, an operator topology graph is constructed based on the created operator nodes.

At S 14, an operation index of each operator node is determined, and the operator topology graph is weighted based on the operation index of each operator node to obtain a weighted operator topology graph.

At S15, an optimal operation path is selected in the weighted operator topology graph.

At S11, the model operation topology graph can be determined by the deep learning inference framework according to the neural network model. The operation nodes in the model operation topology graph correspond to operation requirements in the neural network model. The same neural network model may include a plurality of same operation requirements, and these same operation requirements are at different locations in the neural network model; correspondingly, the model operation topology graph include a plurality of same operation nodes, and these same operation nodes are at different locations in the model operation topology graph.

Operation types of the operation nodes are linear operations, such as addition, subtraction, multiplication, division, or non-linear operations such as convolution. There are multiple operators with the same type as the operation node, and the multiple operators are on the same or different arithmetic devices. The arithmetic devices are central processing unit (CPU), graphics processing unit (GPU), digital signal processing (DSP) device, accelerated processing unit (APU), neural network processing unit (NPU), and the like.

For example, there are multiple operators of which operation types are addition, including an addition operator 1 and an addition operator 2 in the CPU, and an addition operator 3 and an addition operator 4 in the GPU. When the operators with the same operation types as the operation nodes are selected, the operators on the same arithmetic device may be selected, or the operators on different arithmetic devices may be selected.

In the embodiments of the present invention, after a plurality of operators with the same operation type as the operation node are selected for each operation node in the model operation topology graph, the operator topology graph is constructed, and the weighted operator topology graph is obtained by weighting the operator topology graph according to the operation index of the operator node, thus more accurately expressing a link between the operators corresponding to the adjacent different operation nodes and making the selected optimal operation path more reasonable, at the same time, reducing the operation cost and improving the efficiency of inference calculation.

A method for determining an optimal operation path is also provided in the embodiments of the present invention. The method includes the one illustrated in FIG. 1. On the basis of method illustrated in FIG. 1, in the operation that the operator topology graph is constructed based on the created operator nodes according to the connection relationship between the operation nodes in the model operation topology graph, for two adjacent operation nodes between which there is a connection link, each operator node corresponding to one operation node is connected to all operator nodes corresponding to the other operation node.

For example, the model operation topology graph includes N operation nodes, the ith operation node and the jth operation node are adjacent, and there is the connection link between the two operation nodes. Each of i and j is greater than or equal to 1 and less than or equal to N. There are Mi operators corresponding to the ith operation node, and there are Mj operator nodes corresponding to the jth operation node. In the operator topology graph, each operator in/of the Mi operators has a connection relation with the Mj operators, and each operator in the Mj operators has a connection relation with the Mi operators. There are Mi^{∗}Mj links between the Mi operators and the Mj operators.

A method for determining an optimal operation path is also provided in the embodiments of the present invention. The method includes the one illustrated in FIG. 1. On the basis of method illustrated in FIG. 1, the operation S14 that the operation index of each operator node is determined may include operations as follows.

At S141, a reference operation capability of the operator node is determined.

At S142, the operation index of the operator node is calculated according to the reference operation capability of the operator node, an input data block and an index calculation function of the operation node corresponding to the operator node.

Before S11, the method in the embodiments of the present invention may further include that a reference operation capability of the operator is determined. The operation that the reference operation capability of the operator is determined includes one of first, test data of a set data volume may be used to test an operation capability of the operator, and a testing result is taken as the reference operation capability of the operator, or second, test data of different data volumes may be used to test the operation capability of the operator, and an average value of testing results is taken as the reference operation capability of the operator.

The operation that the reference operation capability of the operator node is determined at S141 may include that the reference operation capability of the corresponding operator of the operator node is taken as the reference operation capability of the operator node.

The reference operation capability of the operator refers to the capability of obtaining an operation result after the operation of the corresponding operation type of the operator is completed. For example, the reference capability is floating-point operations per second (FLOPS).

The operation index is operation time or operation speed. For the same data to be operated, the shorter the operation time of the operator node is, the greater the operation capability is; and the higher the operation speed of operator node is, the greater the operation capability is.

The index calculation function of the operator node is related to the operation type of the operator node, and also to the shape and format of input data.

For example, when the operation type of the operator node is convolution operation, the input data is in the form of matrix; when the data volumes of input matrices are the same but the shapes are different, the operation indexes of the operator nodes are different. For example, when the matrix shapes of the input data respectively include 3 rows and 4 columns and 2 rows and 6 columns, the data volumes of the input matrices are the same but the shapes are different, the operation indexes of the operator nodes are different.

In another example, if the operation type of the operator node is softmax operation, when the formats of the input data are different, the operation indexes of the operator nodes are different. For example, when the data volumes of the input data are the same, and the formats respectively include NHWC and NCHW, the data volumes of the input data are the same but the formats are different, and the operation indexes of the operator nodes are different.

In the embodiments of the present invention, the reference operation capability of each operator is obtained in advance. In a practical inference stage, the reference operation capability of the operator corresponding to the operator node is determined, and the operation index of the operator node is calculated according to the reference operation capability of the operator node, the input data block and the index calculation function of the operation node corresponding to the operator node, thus obtaining the accurate operation index of the operator node.

A method for determining an optimal operation path is also provided in the embodiments of the present invention. The method includes the one illustrated in FIG. 1. On the basis of method illustrated in FIG. 1, the operation that the operator topology graph is weighted based on the operation index of each operator node at S14 includes one of the followings.

In the first manner, an operation index of forward edge including the operator node and a forward adjacent operator node is determined according to the operation index of each operator node.

For example, the operation index of each operator node is taken as the operation index of forward edge including the operator node and the forward adjacent operator node; or the product of the operation index of each operator node and a first proportion is taken as the operation index of forward edge including the operator node and the forward adjacent operator node. The first proportion is less than 1 or greater than 1.

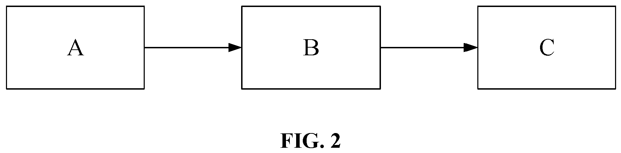

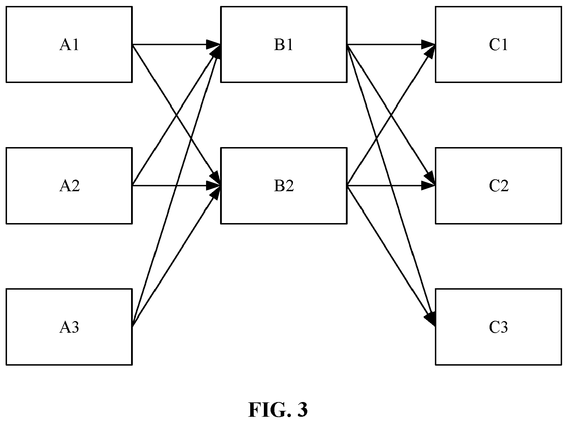

FIG. 2 is a structure diagram of a model operation topology graph according to an exemplary embodiment. As illustrated in FIG. 2, the model operation topology graph includes three operation nodes inclduing an operation node A, an operation node B, and an operation node C. FIG. 3 is a structure diagram of an operator topology graph corresponding to the model operation topology graph in FIG. 2 according to an exemplary embodiment. As illustrated in FIG. 3, the operation type of the operation node A is addition; corresponding operators include an addition operator A1, an addition operator A2 and an addition operator A3. The operation type of the operation node B is subtraction; corresponding operators include a subtraction operator B1 and a subtraction operator B2. The operation type of the operation node C is multiplication; corresponding operators include a multiplication operator C1, a multiplication operator C2 and a multiplication operator C3.

The operation index of each operator node is taken as the operation index of forward edge including the operator node and the forward adj acent operator node. For example, the operation index of a directed edge from the addition operator A1 to the subtraction operator B1 is the operation index of the subtraction operator B1, and the operation index of a directed edge from the subtraction operator B1 to the multiplication operator C1 is the operation index of the multiplication operator C1. The operation index of the operator node of the first operation node will be ignored.

In the second manner, an operation index of backward edge including the operator node and a backward adjacent operator node is determined according to the operation index of each operator node.

For example, the operation index of each operator node is taken as the operation index of backward edge including the operator node and the backward adjacent operator node; or the product of the operation index of each operator node and a first proportion is taken as the operation index of backward edge including the operator node and the backward adjacent operator node. The first proportion is less than 1 or greater than 1.

An illustration is given by taking FIG. 2 and FIG. 3 for example. The operation index of each operator node is taken as the operation index of backward edge including the operator node and the backward adjacent operator node. For example, the operation index of a directed edge from the addition operator A1 to the subtraction operator B1 is the operation index of the addition operator A1, and the operation index of a directed edge from the subtraction operator B1 to the multiplication operator C1 is the operation index of the subtraction operator B1. The operation index of the operator node of the last operation node will be ignored.

In the embodiments of the present invention, different forms of weighted operator topology graphs are provided by supporting weighting modes in different directions.

A method for determining an optimal operation path is also provided in the embodiments of the present invention. The method includes the one illustrated in FIG. 1. On the basis of the method illustrated in FIG. 1, when the optimal operation path is selected in the weighted operator topology graph at S15, a dynamic programming algorithm is used to select the optimal operation path in the weighted operator topology graph.

The dynamic programming algorithm is a mathematical method to solve the optimization of a decision process. In the process of application, a multi-stage process is transformed into a series of single-stage problems, which are solved one by one by using the relationship between the stages, and finally an optimal solution is obtained. The dynamic programming algorithm includes a Freudian algorithm, a Dijkstra algorithm, a Prim algorithm, and the like.

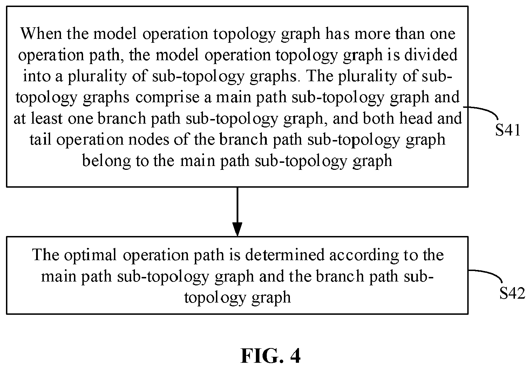

A method for determining an optimal operation path is also provided in the embodiments of the present invention. The method includes the one illustrated in FIG. 1. On the basis of method illustrated in FIG. 1, as illustrated in FIG. 4, the operation that the optimal operation path is selected in the weighted operator topology graph at S15 may include operations as follows.

At S41, when the model operation topology graph has more than one operation path, the model operation topology graph is divided into a plurality of sub-topology graphs. The plurality of sub-topology graphs include a main path sub-topology graph and at least one branch path sub-topology graph, and both head and tail operation nodes of the branch path sub-topology graph belong to the main path sub-topology graph.

At S42, the optimal operation path is determined according to the main path sub-topology graph and the branch path sub-topology graph.

The operation path is a path from the beginning to the end of the weighted operator topology graph.

The operation that the optimal operation path is determined according to the main path sub-topology graph and the branch path sub-topology graph at S42 includes one of the following manners.

In the first manner, a main path weighted operator topology graph corresponding to the main path sub-topology graph is determined, an optimal operator node of all the operation nodes in the main path weighted operator topology graph is determined, and a main path optimal operation path is determined according to the determined optimal operator node. For each branch path sub-topology graph, the optimal operator node corresponding to the operation nodes except the head operation node and the tail operation node is determined, and a branch path optimal operation path is determined according to the determined optimal operator node, the optimal operator node of the head operation node and the optimal operator node of the tail operation node; and the main path optimal operation path and the branch path optimal operation path are composed into the optimal operation path.

In the second manner, the main path weighted operator topology graph corresponding to the main path sub-topology graph is determined, and the optimal operator node corresponding to each operation node in the main path weighted operator topology graph is determined. For each branch path sub-topology graph, the optimal operator node corresponding to the operation nodes except the head operation node and the tail operation node is determined; and the optimal operation path is formed according to the determined optimal operator node.

In the embodiments of the present invention, when the structure of the model operation topology graph is complex because of multiple branches, the model operation topology graph is decomposed effectively into multiple sub-topologies, after that, the optimal operation path is determined according to the multiple sub-topologies, thus effectively preventing the NP problem (that is, the problem of verifying to obtain the correct solution in polynomial time), and still ensuring the performance of the link when the topology is more complex.

The first manner and the second manner are illustrated with examples below.

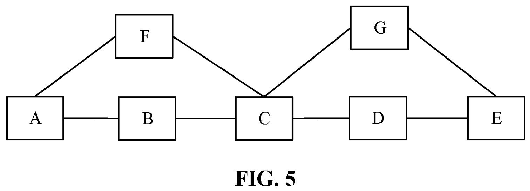

FIG. 5 is a structure diagram of a model operation topology graph in examples. The model operation topology graph includes seven operation nodes including an operation node A, an operation node B, an operation node C, an operation node D, an operation node E, an operation node F, and an operation node G. The model operation topology graph includes four paths.

A first path includes the operation node A, the operation node B, the operation node C, the operation node D and the operation node E in sequence.

A second path includes the operation node A, the operation node F, the operation node C, the operation node D and the operation node E in sequence.

A third path includes the operation node A, the operation node B, the operation node C, the operation node G and the operation node E in sequence.

A fourth path includes the operation node A, the operation node F, the operation node C, the operation node G and the operation node E in sequence.

Each operation node corresponds to ten operator nodes. For example, the operation node A corresponds to the operator nodes A1, A2, ..., A10. The operation node B corresponds to the operator nodes B1, B2, ..., B10.

The model operation topology graph is divided into one main path sub-topology graph and two branch path sub-topology graphs. The main path sub-topology graph includes the operation nodes A, B, C, D and E. A branch path sub-topology is determined according to a principle that both the head operation node and the tail operation node of the branch path sub-topology graph belong to the main path sub-topology graph. According to the principle, a first branch path sub-topology graph determined includes the operation node A, the operation node F and the operation node C; and a second branch path sub-topology graph determined includes the operation node C, the operation node G and the operation node E.

When the optimal operation path is determined according to the first manner, for the main path sub-topology graph, the main path weighted operator topology graph corresponding to the main path sub-topology graph is determined, the optimal operator of all the operation nodes in the main path weighted operator topology graph is determined, and it is determined according to the determined optimal operator that the main path optimal operation path includes an operator node A1, an operator node B1, an operator node C1, an operator node D1 and an operator node E1 which are connected in sequence.

For the first branch path sub-topology graph, the first branch path weighted operator topology graph corresponding to the first branch path sub-topology graph is determined, the optimal operator node of all the operation nodes in the first branch path weighted operator topology graph is determined, and it is determined according to the determined optimal operator node that the first branch path optimal operation path includes the operator node A1, the operator node F2 and the operator node C1 which are connected in sequence.

For the second branch path sub-topology graph, it is determined that the second branch path optimal operation path includes the operator node C1, the operator node G2 and the operator node E1 which are connected in sequence.

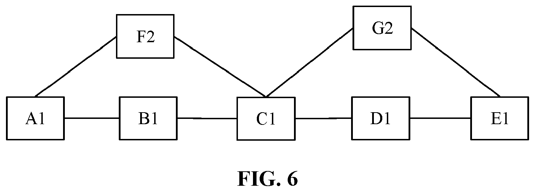

By combining the main path optimal operation path and each branch path optimal operation path, and merging the operator nodes, belonging to the main path optimal operation path, of each branch path optimal operation path and the operator nodes in the main path optimal operation path, the final optimal operation path is obtained. As illustrated in FIG. 6, the optimal operation path includes the operator nodes A1, B1, C1, D1, E1, F2 and G2.

When the optimal operation path is determined according to the second manner, it is determined that the optimal operator nodes of each operation node in the main path sub-topology graph include A1, B1, C1, D1 and E1. It is determined that the optimal operator node of the operation node F in the first branch path sub-topology graph is F2. It is determined that the optimal operator of the operation node G in the second branch path sub-topology graph is G2. The final optimal operation path is obtained by combining the main path optimal operation path and each branch path optimal operation path. As illustrated in FIG. 6, the optimal operation path includes the operator nodes A1, B1, C1, D1, E1, F2 and G2.

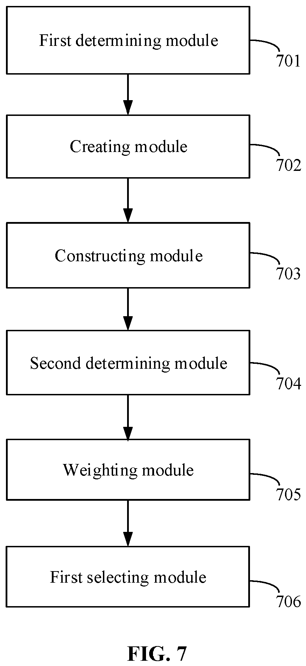

In the embodiments of the present invention, a device for determining an optimal operation path is also provided. FIG. 7 is a structure diagram of a device for determining an optimal operation path according to an exemplary embodiment. As illustrated in FIG. 7, the device may include a first determining module 701, a creating module 702, a constructing module 703, a second determining module 704, a weighting module 705, and a first selecting module 706.

The first determining module 701 is configured to determine a model operation topology graph according to a neural network model, and the model operation topology graph includes a plurality of operation nodes.

The creating module 702 is configured to select a plurality of operators with a same operation type as the operation node for each operation node in the model operation topology graph, and create a corresponding operator node for each operator.

The constructing module 703 is configured to construct, according to a connection relationship between the operation nodes in the model operation topology graph, an operator topology graph based on the created operator nodes.

The second determining module 704 is configured to determine an operation index of each operator node.

The weighting module 705 is configured to weight the operator topology graph based on the operation index of each operator node to obtain a weighted operator topology graph.

The first selecting module 706 is configured to select an optimal operation path in the weighted operator topology graph.

In the embodiments of the present invention, a device for determining an optimal operation path is also provided. The device includes all the modules in the device illustrated in FIG. 7, and the second determining module 704 may include a third determining module and a calculating module.

The third determining module is configured to determine a reference operation capability of the operator node.

The calculating module is configured to calculate the operation index of the operator node according to the reference operation capability of the operator node, an input data block and an index calculation function of the operation node corresponding to the operator node.

In another embodiment, the device may further include a fourth determining module, configured to determine a reference operation capability of the operator.

The third determining module is further configured to take the reference operation capability of the corresponding operator of the operator node as the reference operation capability of the operator node.

The operation that the reference operation capability of the operator is determined includes one of test data of a set data volume that can be used to test an operation capability of the operator, and a testing result is taken as the reference operation capability of the operator; or test data of different data volumes is used to test the operation capability of the operator, and an average value of testing results is taken as the reference operation capability of the operator.

In the embodiments of the present invention, a device for determining an optimal operation path is also provided. The device includes all the modules in the device illustrated in FIG. 7, and the weighting module 705 is configured to weight the operator topology graph based on the operation index of each operator node by using one of an operation index of forward edge including the operator node and a forward adjacent operator node is determined according to the operation index of each operator node; or an operation index of backward edge including the operator node and a backward adjacent operator node is determined according to the operation index of each operator node.

In the embodiments of the present invention, a device for determining an optimal operation path is also provided. The device includes all the modules in the device illustrated in FIG. 7, and the first selecting module 706 may include a dividing module and a second selecting module.

The dividing module is configured to divide, when the model operation topology graph has more than one operation path, the model operation topology graph into a plurality of sub-topology graphs; the plurality of sub-topology graphs include a main path sub-topology graph and at least one branch path sub-topology graph, and both head and tail operation nodes of the branch path sub-topology graph belong to the main path sub-topology graph; and

The second selecting module is configured to determine the optimal operation path in the weighted operator topology graph according to the main path sub-topology graph and the branch path sub-topology graph.

In another embodiment, the second selecting module can be further configured to determine the optimal operation path in the weighted operator topology graph according to the main path sub-topology graph and the branch path sub-topology graph by using one of:
a main path weighted operator topology graph corresponding to the main path sub-topology graph is determined, an optimal operator node of all the operation nodes in the main path weighted operator topology graph is determined, and a main path optimal operation path is determined according to the determined optimal operator node; for each branch path sub-topology graph, the optimal operator node corresponding to the operation nodes except the head operation node and the tail operation node is determined, and a branch path optimal operation path is determined according to the determined optimal operator node, the optimal operator node of the head operation node and the optimal operator node of the tail operation node; and the main path optimal operation path and the branch path optimal operation path are composed into the optimal operation path; or
the main path weighted operator topology graph corresponding to the main path sub-topology graph is determined, and the optimal operator node corresponding to each operation node in the main path weighted operator topology graph is determined; for each branch path sub-topology graph, the optimal operator node corresponding to the operation nodes except the head operation node and the tail operation node is determined; and the optimal operation path is formed according to the determined optimal operator node.

In the embodiments of the present invention, a device for determining an optimal operation path is also provided. The device may include:
a processor; and
a memory configured to store instructions executable by the processor,
the processor is configured to:
   determine a model operation topology graph according to a neural network model, the model operation topology graph including a plurality of operation nodes;
   select a plurality of operators with a same operation type as the operation node for each operation node in the model operation topology graph, and create a corresponding operator node for each operator;
   according to a connection relationship between the operation nodes in the model operation topology graph, construct an operator topology graph based on the created operator nodes;
   determine an operation index of each operator node, and weight the operator topology graph based on the operation index of each operator node to obtain a weighted operator topology graph; and
   select an optimal operation path in the weighted operator topology graph.

In the embodiments of the present invention, a non-transitory computer-readable storage medium is also provided. When instructions in the storage medium are executed by the processor of a mobile terminal, the mobile terminal can execute the method for determining an optimal operation path. The method may include that:
a model operation topology graph is determined according to a neural network model, and the model operation topology graph includes a plurality of operation nodes;
a plurality of operators with a same operation type as the operation node are selected for each operation node in the model operation topology graph, and a corresponding operator node is created for each operator;
according to a connection relationship between the operation nodes in the model operation topology graph, an operator topology graph is constructed based on the created operator nodes;
an operation index of each operator node is determined, and the operator topology graph is weighted based on the operation index of each operator node to obtain a weighted operator topology graph; and
an optimal operation path is selected in the weighted operator topology graph.

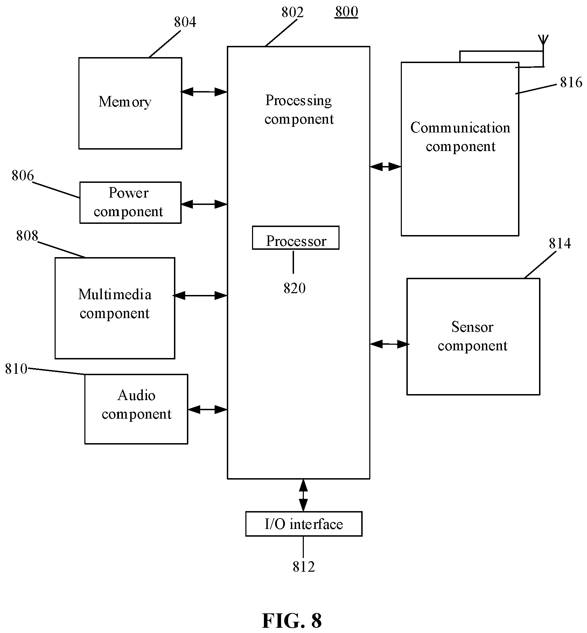

FIG. 8 is a block diagram of a device 800 for determining an optimal operation path according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to FIG. 8, the device 800 may include one or more of the following components a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above method. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 806 provides power for various components of the device 800. The power component 806 may include a power management system, one or more power supplies, and other components associated with generation, management and distribution of power for the device 800.

The multimedia component 808 includes a screen providing an output interface between the device 800 and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a period of time and a pressure associated with the touch or swipe action. In some embodiments, the multimedia component 808 includes a front camera and/or a rear camera. The front camera and/or the rear camera may receive external multimedia data when the device 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a microphone (MIC), and the MIC is configured to receive an external audio signal when the device 800 is in an operation mode, such as a call mode, a recording mode and a voice recognition mode. The received audio signal may further be stored in the memory 804 or sent through the communication component 816. In some embodiments, the audio component 810 further includes a speaker configured to output the audio signal.

The I/O interface 812 provides an interface between the processing component 802 and peripheral interface modules, such as a keyboard, a click wheel, buttons, and the like. The buttons may include, but are not limited to a home button, a volume button, a starting button and a locking button.

The sensor component 814 includes one or more sensors configured to provide status assessments in various aspects for the device 800. For instance, the sensor component 814 may detect an on/off status of the device 800 and relative positioning of components, such as a display and small keyboard of the device 800, and the sensor component 814 may further detect a change in a position of the device 800 or a component of the device 800, presence or absence of contact between the user and the device 800, orientation or acceleration/deceleration of the device 800 and a change in temperature of the device 800. The sensor component 814 may include a proximity sensor configured to detect presence of an object nearby without any physical contact. The sensor component 814 may also include a light sensor, such as a complementary metal oxide semiconductor (CMOS) or charge coupled device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the device 800 and other devices. The device 800 may access a communication-standard-based wireless network, such as a wireless fidelity (WiFi) network, a 2nd-generation (2G) or 3rd-generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In an exemplary embodiment, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, and is configured to execute the above method.

In an exemplary embodiment, there is also provided a non-transitory computer-readable storage medium including instructions, such as included in the memory 804, executable by the processor 820 of the device 800 for performing the abovementioned methods. For example, the non-transitory computer-readable storage medium may be a ROM, a random access memory (RAM), a compact disc read-only memory (CD-ROM), a magnetic tape, a floppy disc, an optical data storage device, and the like.

Other implementation solutions of the present invention will be apparent to those skilled in the art from consideration of the specification and practice of the present invention. This present invention is intended to cover any variations, uses, or adaptations of the present invention following the general principles thereof and including such departures from the present invention as come within known or customary practice in the art. It is intended that the specification and examples be considered as exemplary only, with a true scope of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the appended claims.

## Claims

1. A method for determining an optimal operation path, **characterized in that** the method comprises:
determining (S11) a model operation topology graph according to a neural network model, the model operation topology graph including a plurality of operation nodes;
selecting (S12) a plurality of operators with a same operation type as the operation node for each operation node in the model operation topology graph, and creating a corresponding operator node for each of the plurality of operators;
constructing (S13), according to a connection relationship between the operation nodes in the model operation topology graph, an operator topology graph based on the created operator nodes;
determining (S14) an operation index of each of the operator nodes, and weighting the operator topology graph based on the operation index of each of the operator nodes to obtain a weighted operator topology graph; and
selecting (S15) an optimal operation path in the weighted operator topology graph.

2. The method of claim 1, wherein determining the operation index of each of the operator nodes further comprises:
determining (S141) a reference operation capability of the operator node; and
calculating (S142) the operation index of the operator node according to the reference operation capability of the operator node, an input data block, and an index calculation function of the operation node corresponding to the operator node.

3. The method of claim 1 or 2, further comprising:
determining a reference operation capability of the operator;
wherein determining the reference operation capability of the operator node comprises: taking the reference operation capability of the corresponding operator of the operator node as the reference operation capability of the operator node;
wherein determining the reference operation capability of the operator comprises one of:
testing an operation capability of the operator by using test data of a set data volume, and taking a testing result as the reference operation capability of the operator; or
testing the operation capability of the operator by using test data of different data volumes, and taking an average value of testing results as the reference operation capability of the operator.

4. The method of any one of the preceding claims, wherein weighting the operator topology graph based on the operation index of each operator node further comprises determining an operation index of one of:
a forward edge including the operator node and a forward adjacent operator node according to the operation index of each operator node; or
a backward edge including the operator node and a backward adj acent operator node according to the operation index of each operator node.

5. The method of any one of the preceding claims, wherein selecting the optimal operation path in the weighted operator topology graph further comprises:
dividing, in response to that the model operation topology graph has more than one operation path, the model operation topology graph into a plurality of sub-topology graphs; the plurality of sub-topology graphs comprise a main path sub-topology graph and at least one branch path sub-topology graph, and both head and tail operation nodes of the branch path sub-topology graph belong to the main path sub-topology graph; and
selecting the optimal operation path in the weighted operator topology graph according to the main path sub-topology graph and the branch path sub-topology graph.

6. The method of claim 5, wherein selecting the optimal operation path in the weighted operator topology graph according to the main path sub-topology graph and the branch path sub-topology graph comprises one of:
determining a main path weighted operator topology graph corresponding to the main path sub-topology graph, determining an optimal operator node of all the operation nodes in the main path weighted operator topology graph, and determining a main path optimal operation path according to the determined optimal operator node; for each branch path sub-topology graph, determining the optimal operator node corresponding to the operation nodes except the head operation node and the tail operation node, and determining a branch path optimal operation path according to the determined optimal operator node, the optimal operator node of the head operation node and the optimal operator node of the tail operation node; and composing the main path optimal operation path and the branch path optimal operation path into the optimal operation path; or
determining the main path weighted operator topology graph corresponding to the main path sub-topology graph, and determining the optimal operator node corresponding to each operation node in the main path weighted operator topology graph; for each branch path sub-topology graph, determining the optimal operator node corresponding to the operation nodes except the head operation node and the tail operation node; and forming the optimal operation path according to the determined optimal operator node.

7. A device for determining an optimal operation path, **characterized in that** the device comprises:
a first determining module (701), configured to determine a model operation topology graph according to a neural network model, the model operation topology graph including a plurality of operation nodes;
a creating module (702), configured to select a plurality of operators with a same operation type as the operation node for each operation node in the model operation topology graph, and create a corresponding operator node for each of the plurality of operators;
a constructing module (703), configured to construct, according to a connection relationship between the operation nodes in the model operation topology graph, an operator topology graph based on the created operator nodes;
a second determining module (704), configured to determine an operation index of each of the operator nodes;
a weighting module (705), configured to weight the operator topology graph based on the operation index of each of the operator nodes to obtain a weighted operator topology graph; and
a first selecting module (706), configured to select an optimal operation path in the weighted operator topology graph.

8. The device of claim 7, wherein the second determining module (704) further comprises:
a third determining module, configured to determine a reference operation capability of the operator node; and
a calculating module, configured to calculate the operation index of the operator node according to the reference operation capability of the operator node, an input data block, and an index calculation function of the operation node corresponding to the operator node.

9. The device of claim 7 or 8, further comprising a fourth determining module, configured to determine a reference operation capability of the operator;
wherein the third determining module is further configured to take the reference operation capability of the corresponding operator of the operator node as the reference operation capability of the operator node;
wherein determining the reference operation capability of the operator comprises one of:
testing an operation capability of the operator by using test data of a set data volume, and taking a testing result as the reference operation capability of the operator; or
testing the operation capability of the operator by using test data of different data volumes, and taking an average value of testing results as the reference operation capability of the operator.

10. The device of any one of claims 7 to 9, wherein the weighting module (705) is further configured, in response to weighting the operator topology graph based on the operation index of each operator node, by determining an operation index of one of:
a forward edge including the operator node and a forward adjacent operator node according to the operation index of each operator node; or
a backward edge including the operator node and a backward adj acent operator node according to the operation index of each operator node.

11. The device of any one of claim 7 to 10, wherein the first selecting module (706) further comprises:
a dividing module, configured to divide, in response to that the model operation topology graph has more than one operation path, the model operation topology graph into a plurality of sub-topology graphs; wherein the plurality of sub-topology graphs comprise a main path sub-topology graph and at least one branch path sub-topology graph, and both head and tail operation nodes of the branch path sub-topology graph belong to the main path sub-topology graph; and
a second selecting module, configured to determine the optimal operation path in the weighted operator topology graph according to the main path sub-topology graph and the branch path sub-topology graph.

12. The device of claim 11, wherein the second selecting module is further configured to determine the optimal operation path in the weighted operator topology graph according to the main path sub-topology graph and the branch path sub-topology graph by using one of:
determining a main path weighted operator topology graph corresponding to the main path sub-topology graph, determining an optimal operator node of all the operation nodes in the main path weighted operator topology graph, and determining a main path optimal operation path according to the determined optimal operator node; for each branch path sub-topology graph, determining the optimal operator node corresponding to the operation nodes except the head operation node and the tail operation node, and determining a branch path optimal operation path according to the determined optimal operator node, the optimal operator node of the head operation node and the optimal operator node of the tail operation node; and composing the main path optimal operation path and the branch path optimal operation path into the optimal operation path; or
determining the main path weighted operator topology graph corresponding to the main path sub-topology graph, and determining the optimal operator node corresponding to each operation node in the main path weighted operator topology graph; for each branch path sub-topology graph, determining the optimal operator node corresponding to the operation nodes except the head operation node and the tail operation node; and forming the optimal operation path according to the determined optimal operator node.

13. A device for determining an optimal operation path, comprising:
a processor; and
a memory configured to store instructions executable by the processor,
the processor is configured to implement the method for determining an optimal operation path of any one of claims 1 to 6.

14. A computer-readable storage medium, when instructions in the storage medium are executed by a processor of a mobile terminal, the mobile terminal can execute the method for determining an optimal operation path of any one of claims 1 to 6.
